# EUROPEAN PATENT SPECIFICATION

(11) **EP 3 785 530 B1**
(45) Date of publication and mention of the grant of the patent: **22.06.2022**
(21) Application number: 20188436.8
(22) Date of filing: 29.07.2020
(51) Int. Cl.: A01J 11/16, A23C 9/15

(54) **METHOD AND SYSTEM FOR HOMOGENIZING A LIQUID FOOD PRODUCT**
VERFAHREN UND SYSTEM ZUR HOMOGENISIERUNG EINES FLÜSSIGEN LEBENSMITTELPRODUKTS
PROCÉDÉ ET SYSTÈME D'HOMOGÉNÉISATION D'UN PRODUIT ALIMENTAIRE LIQUIDE

(30) Priority: 14.08.2019 EP 19191728
(43) Date of publication of application: 03.03.2021
(73) Proprietor: Tetra Laval Holdings & Finance S.A., 1009 Pully (CH)
(72) Inventor: Ransmark, Eva, 22480 Lund (SE)
(74) Representative: Tetra Pak - Patent Attorneys SE

(56) References cited:
- WO-A1-2014/095896
- US-A- 1 912 073
- US-A- 4 144 804
- US-A- 5 498 075
- US-B1- 6 358 551
- SPREER E ET AL: "Milk and Diary Product Technology, Milk processings", 1 January 1998 (1998-01-01), MILK AND DIARY PRODUCT TECHNOLOGY; [FOOD SCIENCE AND TECHNOLOGY ; 84], MARCEL DEKKER, NEW YORK, NY [U.A.], PAGE(S) 73 - 127, XP003027401, ISBN: 978-0-8247-0094-2

## Description

### Technical Field

The invention relates to the field of liquid food product processing. More particularly, the invention relates to standardization with partial homogenization.

### Background Art

Today it is well known to break up fat globules in liquid food products by using a homogenizer. This is called homogenization, which can be divided into three homogenization techniques; traditional homogenization - double, one-step homogenization, and partial homogenization. The traditional homogenization and the one-step homogenization require a homogenizer of large capacity, while the partial homogenization can use a homogenizer of a smaller size due to that only the part of the food product with higher fat content is homogenized. This enables large savings in energy but also in investment cost for the food producer. The liquid food may be milk or some milk product, or another food product that contains fat, such as coconut based food products. The principle of complete homogenization, cream homogenization and partial homogenization have been discussed in Milk and Dairy Product Technology by Edgar Spreer.

Even though partial homogenization provides energy savings, it is still a process that requires high pressures, i.e. a lot of energy. Also, when mixing the homogenized high-fat part of the food with the non-homogenized low-fat part of the food, it has been seen that that some agglomeration of fat globules sometimes occur, resulting in a food product that appears insufficiently homogenized.

For these reasons, there is a demand for a processing system that is capable of performing partial homogenization of liquid food products, in particular milk products, with increased energy efficiency and while reducing the risk that fat globules agglomerate after the homogenization.

### Summary

It is an object to at least partly overcome one or more of the above-identified limitations of the prior art.

According to a first aspect it is therefore provided a method for processing liquid food product, the method comprising: providing a flow of a first food component having a first fat content; providing a flow of a second food component having a second fat content that is higher than the first fat content; increasing, by means of a pump, a pressure of the second food component; forcing the second food component through a first gap such that the second food component is homogenized and the pressure of the second food component thereby decreases; combining the first food component and the homogenized second food component to form a liquid food product that obtains a predetermined fat content; and forcing the liquid food product through a second gap such that the liquid food product is homogenized and the pressure of the liquid food product thereby decreases.

The step of increasing the pressure of the second food component may be preceded by combining the first food component and the second food component such that the second food component has a fat content of 8-22 wt%, or has a fat content of 12-20 wt%, or has a fat content of 18-20 wt%. Herein, wt% means mass percent or weight percent.

The step of combining the first food component and the homogenized second food component to form the liquid food component may be preceded by forcing the second food component through a third gap such that the second food component may be further homogenized and the pressure of the second food component may thereby further decrease.

The method may further comprise, after the step of forcing the liquid food product through the second gap, combining the first food component and the liquid food product such that the liquid food product obtains a fat content of 1-5 wt%, alternatively obtains a fat content of 1,5-4 wt%.

The method may further comprise feeding the liquid food product into a heat treatment apparatus after the step of forcing the liquid food product through the second gap. Optionally, the step of feeding the liquid food product into the heat treatment apparatus may be performed after the step of combining the first food component and the liquid food product.

The first food component may have a fat content of 0.03-1 wt%. The predetermined fat content may be 1-5 wt%, more preferably 1.5-4 wt%.

The step of increasing, by means of the pump, the pressure of the second food component may comprise increasing the pressure to at least 80 bar.

The forcing of the second food component through the first gap may decrease the pressure of the second food component by 15-30 %, or by around 20%, or by at least 15-30%.

The forcing of the liquid food product through the second gap may decrease the pressure of the liquid food product to a pressure value that is less than 15 bar.

The forcing of the liquid food component through the third gap may decrease the pressure of the second food component by 15-30%.

For the method a pressure of the second food component may be increased to a pressure of at least 80 bar only once, and a pressure of the liquid food product may never be increased to a pressure above 30 bar.

According to a second aspect it is provided a system for processing liquid food product. The system comprises: a first fluid line for providing a flow of a first food component having a first fat content, and a second fluid line for providing a flow of a second food component having a second fat content that is higher than the first fat content, a pump arranged to increase a pressure of the second food component. The system has a first gap arranged to receive the second food component, such that the second food component may be forced through the first gap and thereby become homogenized and cause the pressure of the second food component to decrease, a combiner arranged to combine the first food component and the homogenized second food component to form a liquid food product that has a predetermined fat content, and a second gap arranged to receive the liquid food product, such that the liquid food product may be forced through the second gap and thereby become homogenized and cause the pressure of the liquid food product to decrease.

The system may further comprise a second combiner arranged to combine the first food component and the second food component such that the second food component may obtain a fat content of 8-22 wt%, or 10-16 wt%, 12-14 wt%.

The system may comprise a third gap arranged to receive the second food component, such that the second food component may be forced through the third gap and thereby become homogenized and cause the pressure of the second food component to decrease.

Still other objectives, features, aspects and advantages of the invention will appear from the following detailed description as well as from the drawings.

### Brief Description of the Drawings

Embodiments will now be described, by way of example, with reference to the accompanying schematic drawings, in which
Fig. 1 schematically illustrates a system for processing liquid food product.
Fig. 2 is a flow chart illustrating steps of a method for processing liquid food product.

### Detailed description

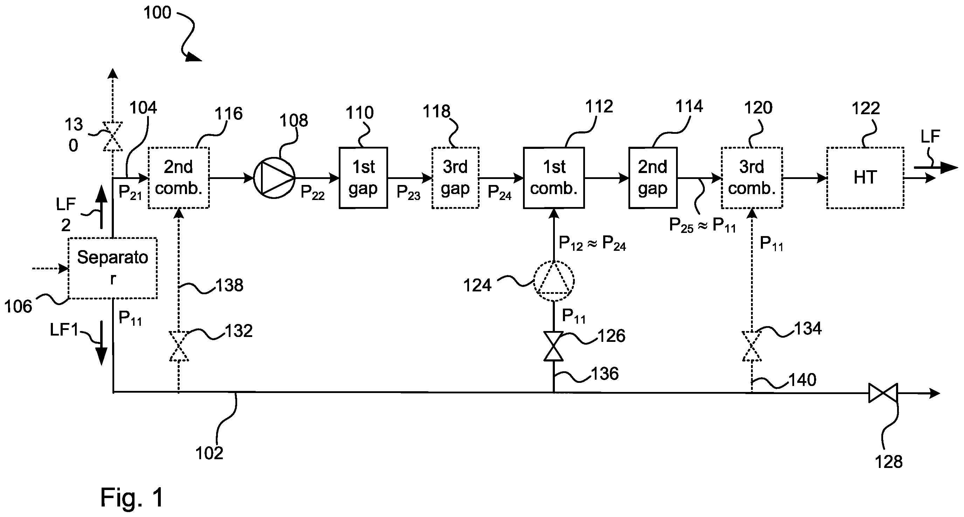

With reference to Fig. 1 a system 100 for processing liquid food product LF is illustrated by way of example. The processing of the liquid food product LF comprises standardization and partial homogenization. The system 100 may comprise a homogenizer and a standardizing unit. The homogenizer may comprise a first pump 108, a first gap 110 and a second gap 114. Optionally, the homogenizer may comprise a third gap 118. The first pump 108, the first gap 110, the second gap 114 and the third gap 118 are not limited to be arranged in one and the same unit but can be arranged separately in the system 100. Basically, the gaps are conventional gaps, sometimes referred to as homogenization devices, found in commercially available homogenizers. The pump may be any conventional pump used for homogenization apparatuses.

The standardizing unit may comprise a first combiner 112. Optionally, the standardizing unit may comprise also a second combiner 116. Optionally, the standardizing unit may comprise a third combiner 120. The first combiner 112, the second combiner 116 and the third combiner 118 are not limited to be arranged in one and the same unit but can be arranged separately in the system 100. A combiner may basically have the form of two pipes joining each other so that fluids flowing in these two pipes are joined and mixed, i.e. combined, with each other.

The system 100 is arranged to homogenize and standardize a first food component LF1 and a second food component LF2 in order to form the liquid food product LF.

The first food component LF1 can be fed into the system 100 in a first food component line 102. The first food component LF1 has a first fat content. The first fat content may preferably be 0.1-1 wt%. The first food component LF1 may have a pressure P₁₁, meaning that the pressure of the first food component LF1 in the first food component line 102 is P₁₁. The first food component LF1 may be skim milk. Alternatively, the first food component LF1 may comprise water and skim milk powder. Alternatively, the first food component LF1 may comprise water and whole milk powder, wherein it may be proportionally more water.

The second food component LF2 can be fed into the system 100 in a second food component line 104. The second food component may comprise a second fat content. The second fat content is higher than the first fat content. The second fat content, i.e. the fat content of the second food component LF2, may be at least 25 wt%. The second food component LF2 may have a pressure P₂₁. The pressure P₁₁ of the first food component LF1 can be approximately the same as the pressure P₂₁ of the second food component LF2. The second food component LF2 may be cream. Alternatively, the second food component LF2 may comprise a combination of oil, water, and milk powder, as well as optionally a stabilizer. Alternatively, the second food component LF2 may comprise water and whole milk powder, as well as optionally a stabilizer.

Optionally, the first food component LF1 and the second food component LF2 may be fed into the system 100 via a separator 106. The separator 106 may be arranged to separate milk into the first food component LF1 having the form of skim milk, and into the second food component LF2 having the form of cream. The separator 106 may be any separator commonly used for dairy and/or food applications.

In order to adjust the fat content of the second food component LF2, the first food component LF1 may be added to the second food component LF2, for instance in that the first food component LF1 and the second food component LF2 is combined in the second combiner 116. The second combiner 112 may be arranged to combine the first food component LF1 and the second food component LF2 in order to obtain a preferred fat content. The preferred fat content may be 8-22 wt%. The second combiner 116 is arranged in the second food component line 104. A part of the first food component LF1 may be fed to the second combiner 116 in a second combiner line 138, in order to obtain the preferred fat content.

The second food component LF2 is fed to the second combiner 116 in the second food component line 104. A control valve 132 may be arranged in the second combiner line 138 to provide for that the first food component LF1, e.g. skim milk, can be fed into the second food component line 104 in the right amounts such that the desired fat content of the second food component LF2 is obtained before reaching the first pump 108. The control valve 132 may be arranged to regulate a flow of the first food component LF1 fed in the second combiner line 138.

In order to increase the pressure of the second food component LF2 from P₂₁ to P₂₂ the first pump 108 is arranged in the second food component line 104. The first pump 108 this increases the pressure of the second food component LF2 to a homogenization pressure P₂₂. The system 100 is not limited to use the first pump 108 for increasing the pressure of the second food component LF2 but can use any device arranged for increasing a pressure of a food component in the system 100. Pressure P₂₂ may be referred to as a homogenization pressure. The homogenization pressure is typically at least 80 bar.

The first gap 110 is arranged to homogenize the second food component LF2. Basically, the gap is a conventional homogenization device that provides a small opening through which the second food component LF2 is forced. When this is done fat globes that are present in the second food component LF2 are broken up, i.e. the second food component LF2 becomes homogenized. The first gap 110 causes a sudden drop of the second food component LF2, from pressure P₂₂ to pressure P₂₃. The gap 110 can be any kind of homogenizing device arranged to homogenize a food product. The pressure P₂₃ of the second food component LF2 after the first gap 110 is typically 15-30% lower than the pressure P₂₂. The pressure P₂₃ may be 50-60 bar.

Optionally, since clusters of fat globules may be formed in the second food component LF2 due to the high fat content downstream the first gap 110, to further homogenize the second food component LF2, the second food component LF2 can be forced through the third gap 118 that is arranged directly after the first gap.

The third gap 118 may be arranged in the same way as the first gap 110. The pressure P₂₄ of the second food component LF2 after the pressure drop may be 15-30% lower than the pressure P₂₃ prior to entering the third gap 118. If the system 100 comprises the first gap 110, the homogenizer device is called single-stage homogenization. In the single-stage homogenization, the whole pressure drop may be used over the first gap 110. If the system 100 comprises both the first gap 110 and the third gap 118, the homogenization is called a two-stage homogenization. In the two-stage homogenization the pressure drop is divided over two pressure drops. Thus, the pressure of the second food component LF2 after the single-stage homogenization and the pressure of the second food component LF2 after the two-stage homogenization may be the same but obtained in different ways. Hence, in the single-stage homogenization, the pressure P₂₃ may be equal to the pressure P₂₄.

The homogenized second food component LF2 and all or a part of the first food component LF1 are fed to the first combiner 112. The first combiner 112 is arranged to combine the first food component LF1 and the homogenized second food component LF2 into the liquid food product LF such that it obtains a predetermined fat content. The predetermined fat content may be 1-5 wt%. The first food component LF1 may be fed to the first combiner 112 in a first combiner line 136. The first food component LF1 and the second food component LF2 may have to have the same pressure in order to be able to combine the two food components. The pressure of the first food component LF1 may be increased to obtain the same pressure as the pressure of the second food component LF2. In order to increase the pressure of the first food component from P₁₁ to P₁₂, wherein P₁₂ is approximately the same as P₂₄, a second pump 124 may be arranged in the first combiner line 136. Optionally, a control valve 126 is be arranged in the first combiner line 136 to provide for that the first food component LF1 can be fed into the second food component line 104 in the right amount so as to obtain the predetermined fat content (standardization) for the liquid food product LF. The control valve 126 may thus be arranged to regulate the flow of the first food component LF1 fed in the first combiner line 136 in order to obtain the desired fat content. The system 100 is not limited to use the second pump 124 for increasing the pressure of the first food component LF1 but can use any device arranged to increase a pressure in a food component. After the first food component LF1 and the homogenized second food component LF2 have been combined into the liquid food product LF, fat in the liquid food product LF may agglomerate.

In order to break any newly formed fat agglomerations the liquid food product LF is forced through the second gap 114 arranged in the second food component line 104. The pressure P₂₅ of the liquid food product LF that has been forced through the second gap 114 can be as low as less than 15 bar.

Optionally, in order to obtain a final fat content of the liquid food product LF, the liquid food product LF can be combined with the first food component LF1 in a third combiner 120. The third combiner 120 may be arranged in the second food component line 104. The first food component LF1 may be fed to the third combiner 120 in a third combiner line 140. The final fat content may be between 1 and 5 wt%. In order to obtain the final fat content, a third control valve 134 may be arranged in the third combiner line 140. The third control valve 134 may be arranged to regulate a flow of the first food component LF1 feed through the third combiner line 140.

Optionally, in order to sterilize the liquid food product LF, the liquid food product may be fed to a heat treatment apparatus 122. According to one example, the heat treatment apparatus 122 may be an ultra-high temperature processing unit.

In addition to what have been discussed above, the system 100 can also comprise valves 128, 130 arranged to regulate the output flow of the first food component LF1, the second food component LF2 and the liquid food product LF from the system 100.

An advantage obtained by using the homogenizer and the standardizing unit within the same system, wherein the homogenizer comprises at least two gaps separated by the combiner, is that homogenization may be efficiently obtained while avoiding using too much energy.

The order by which the food components and liquid food product pass the various parts of the system is shown in Fig. 1. Thus, in the most general embodiment, in line 104 liquid first passes the pump 108, thereafter the first gap 110, then the first combiner 112 and thereafter the second gap 114. If the optional, second combiner 116 is used this one is passed before the pump 108. If the optional third gap 118 is used this one is passed after the first gap 110, before the first combiner 112. If the optional third combiner 120 is used, this one is passed after the second gap 114. Thus, "first", "second" and "third" used for denoting the components of the system 100 do not necessarily denote the order by which fluid pass the respective component, but instead indicates that the components are different form each other.

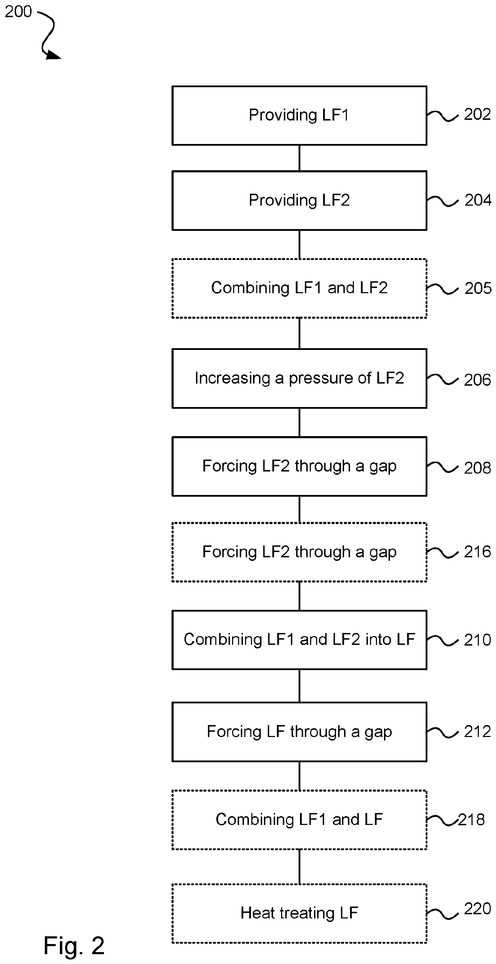

Fig. 2 is a flow chart illustrating steps of a method 200 for processing liquid food product LF. The method may be performed by using a system like the system 100 described in connection with Fig. 1.

In a first step 202 of the method 200, a flow of the first food component LF1 is provided, wherein the first food component LF1 has a first fat content. Preferably, the first fat content may be in the range of 0.03-1 wt%.

In a second step 204, a flow of the second food component LF2 is provided, wherein the second food component LF2 has a second fat content. The second fat content is higher than the first fat content. Preferably, the second fat content may be in the range of 1-5 wt%.

Optionally, the flow of the first food component LF1 and the flow of the second food component LF2 are provided by using the separator 106.

In a third step 206, the pressure of the second food component LF2 is increased. This may be made by using means of the first pump 108. The pressure of the second food component LF2 may be increased to a pressure of at least 80. Optionally, the pressure of the second food component LF2 is increased only once to a pressure of at least 80 bar.

In a forth step 208, the second food component LF2 is forced through the first gap 110 such that the second food component LF2 is homogenized. As a consequence of the second food component LF2 being homogenized, the pressure of the second food component LF2 decreases. The pressure of the second food component LF2 may be decreased by 15-30%, or to 50-60 bar.

In a fifth step 210, the first food component LF1 and the homogenized second food component LF2 are combined to form the liquid food product LF. This step may be referred to as standardization. The liquid food product then obtains a predetermined fat content. The predetermined fat content may be 1-5%, more preferably 1.5-4%. To obtain the predetermined fat content the first and second food components are mixed at such amounts, taking their respective fat content into account, that that the predetermined fat content is reached. Typically, this involves using commonly known techniques for performing fat standardization of food products, including dairy products.

In a sixth step 212, the liquid food product LF is forced through the second gap 114 such that the liquid food product LF is homogenized. As a consequence of the liquid food product LF being homogenized, the pressure of the liquid food product LF again decreases. The pressure of the liquid food component LF may be decreased by 15-30%, or to a pressure value that is less than 15 bar. Preferably, the pressure of the second food component LF2 and the liquid food product LF is only once increased to a homogenization pressure of at least 80 bar.

In a seventh, optional step 205 the first food component LF1 is combined with the second food component LF2 such that the second food component LF2 obtains a fat content of 8-22 wt%, more preferably 18-20 wt%.

In an eighth, optional step 209, the homogenized second food component LF2 may be forced through the third gap 118 such that the second food component can be further homogenized. As a consequence of the second food component LF2 being further homogenized, the pressure of the second food component LF2 is further decreased.

In a ninth, optional step 218, the first food component LF1 may be combined with the liquid food product LF such that the liquid food product LF may obtain a fat content of 1-5 wt%, or 1.5-4 wt%.

In a tenth, optional step 220, the liquid food product LF may be feed through a heat treatment apparatus 122, such that it becomes pasteurized or sterilized. The steps of the method 200 may follow the order illustrated in Fig. 2.

From the description above follows that, although various embodiments of the invention have been described and shown, the invention is not restricted thereto, but may also be embodied in other ways within the scope of the subject-matter defined in the following claims.

## Claims

1. A method (200) for processing liquid food product (LF), the method (200) comprising:
providing (202) a flow of a first food component (LF1) having a first fat content,
providing (204) a flow of a second food component (LF2) having a second fat content that is higher than the first fat content,
increasing (206), by means of a pump (108), a pressure of the second food component (LF2),
forcing (208) the second food component (LF2) through a first gap (110) such that the second food component (LF2) is homogenized and the pressure of the second food component (LF2) thereby decreases,
combining (210) the first food component (LF1) and the homogenized second food component (LF2) to form a liquid food product (LF) that has a predetermined fat content, and
forcing (212) the liquid food product (LF) through a second gap (114) such that the liquid food product (LF) is homogenized and the pressure of the liquid food product (LF) thereby decreases.

2. The method according to claim 1, wherein the step of increasing (206) the pressure of the second food component (LF2) is preceded by combining (205) the first food component (LF1) and the second food component (LF2) such that the second food component (LF2) has a fat content of 8-22 wt%.

3. The method according to anyone of the preceding claims, wherein the step of combining (210) the first food component (LF1) and the homogenized second food component (LF2) to form the liquid food component (LF) is preceded by forcing (209) the second food component (LF2) through a third gap (118) such that the second food component (LF2) is further homogenized and the pressure of the second food component (LF2) is thereby further decreased.

4. The method according to any one of the preceding claims, comprising, after the step of forcing (212) the liquid food product (LF) through the second gap (114), combining (218) the first food component (LF1) and the liquid food product (LF) such that the liquid food product (LF) has a fat content of 1-5 wt%.

5. The method (200) according to any one of the preceding claims, comprising feeding (220) the liquid food product (LF) into a heat treatment apparatus (122) after the step of forcing (212) the liquid food product (LF) through the second gap (114).

6. The method (200) according to any one of the preceding claims, wherein the first food component (LF1) has a fat content of 0.03-1 wt%.

7. The method (200) according to any one of the preceding claims, wherein the predetermined fat content is 1-5 wt%, or is 1.5-4 wt%.

8. The method (200) according to any one of the preceding claims, wherein the step of increasing (206), by means of the pump (108), the pressure of the second food component (LF2) comprises increasing the pressure to at least 80 bar.

9. The method (200) according to any one of the preceding claims, wherein the forcing (208) of the second food component (LF2) through the first gap (110) decreases the pressure of the second food component (LF2) by 15-30%.

10. The method (200) according to any one of the preceding claims, wherein the forcing (212) of the liquid food product (LF) through the second gap (114) decreases the pressure of the liquid food product (LF) to a pressure value that is less than 15 bar.

11. The method (200) according to claim 3, wherein the forcing (205) of the liquid food component (LF) through the third gap (118) decreases the pressure of the second food component (LF2) by 15-30%.

12. The method (200) according to any one of the preceding claims, wherein
a pressure of the second food component (LF2) is increased only once to a pressure of at least 80 bar only once, and
a pressure of the liquid food product (LF) is never increased to a pressure above 30 bar.

13. A system (100) for processing liquid food product (LF), the system (100) comprising:
a first fluid line for providing a flow of a first food component (LF1) having a first fat content,
a second fluid line for providing a flow of a second food component (LF2) having a second fat content that is higher than the first fat content,
a pump (108) arranged to increase a pressure of the second food component (LF2),
a first gap (110) arranged to receive the second food component (LF2), such that the second food component (LF2) may be forced through the first gap (110) and thereby become homogenized and cause the pressure of the second food component (LF2) to decrease,
a combiner (112) arranged to combine the first food component (LF1) and the homogenized second food component (LF2) to form a liquid food product (LF) that has a predetermined fat content, and
a second gap (114) arranged to receive the liquid food product (LF), such that the liquid food product (LF) may be forced through the second gap (114) and thereby become homogenized and cause the pressure of the liquid food product (LF) to decrease.

14. The system (100) according to claim 13, comprising a second combiner (116) arranged to combine the first food component (LF1) and the second food component (LF2) such that the second food component (LF2) has a fat content of 8-22 wt%.

15. The system (100) according to any one of the preceding claims, comprising a third gap (118) arranged to receive the second food component (LF2), such that the second food component (LF2) may be forced through the third gap (118) and thereby become homogenized and cause the pressure of the second food component (LF2) to decrease.

## Patentansprüche

1. Verfahren (200) zum Verarbeiten von flüssigem Lebensmittelprodukt (LF), wobei das Verfahren (200) umfasst:
Bereitstellen (202) eines Flusses einer ersten Lebensmittelkomponente (LF1) mit einem ersten Fettgehalt,
Bereitstellen (204) eines Flusses einer zweiten Lebensmittelkomponente (LF2) mit einem zweiten Fettgehalt, der höher als der erste Fettgehalt ist,
Erhöhen (206) eines Drucks der zweiten Lebensmittelkomponente (LF2) mittels einer Pumpe (108), Zwingen (208) der zweiten Lebensmittelkomponente (LF2) durch einen ersten Spalt (110), so dass die zweite Lebensmittelkomponente (LF2) homogenisiert wird und der Druck der zweiten Lebensmittelkomponente (LF2) dadurch abnimmt,
Kombinieren (210) der ersten Lebensmittelkomponente (LF1) und der homogenisierten zweiten Lebensmittelkomponente (LF2) zur Bildung eines flüssigen Lebensmittelprodukts (LF), das einen vorgegebenen Fettgehalt hat, und
Zwingen (212) des flüssigen Lebensmittelprodukts (LF) durch einen zweiten Spalt (114), so dass das flüssige Lebensmittelprodukt (LF) homogenisiert wird und der Druck des flüssigen Lebensmittelprodukts (LF) dadurch abnimmt.

2. Verfahren nach Anspruch 1, wobei dem Schritt des Erhöhens (206) des Drucks der zweiten Lebensmittelkomponente (LF2) das Kombinieren (205) der ersten Lebensmittelkomponente (LF1) und der zweiten Lebensmittelkomponente (LF2) vorausgeht, so dass die zweite Lebensmittelkomponente (LF2) einen Fettgehalt von 8 bis 22 Gew.% aufweist.

3. Verfahren nach einem der vorhergehenden Ansprüche, wobei dem Schritt des Kombinierens (210) der ersten Lebensmittelkomponente (LF1) und der homogenisierten zweiten Lebensmittelkomponente (LF2) zur Bildung der flüssigen Lebensmittelkomponente (LF) das Zwingen (209) der zweiten Lebensmittelkomponente (LF2) durch einen dritten Spalt (118) vorausgeht, so dass die zweite Lebensmittelkomponente (LF2) weiter homogenisiert wird und der Druck der zweiten Lebensmittelkomponente (LF2) dadurch weiter abnimmt.

4. Verfahren nach einem der vorhergehenden Ansprüche, umfassend nach dem Schritt des Zwingens (212) des flüssigen Lebensmittelprodukts (LF) durch den zweiten Spalt (114) Kombinieren (218) der ersten Lebensmittelkomponente (LF1) und des flüssigen Lebensmittelprodukts (LF), so dass das flüssige Lebensmittelprodukt (LF) einen Fettgehalt von 1 bis 5 Gew.% hat.

5. Verfahren (200) nach einem der vorhergehenden Ansprüche, umfassend Einspeisen (220) des flüssigen Lebensmittelprodukts (LF) in eine Wärmebehandlungsvorrichtung (122) nach dem Schritt des Zwingens (212) des flüssigen Lebensmittelprodukts (LF) durch den zweiten Spalt (114).

6. Verfahren (200) nach einem der vorhergehenden Ansprüche, wobei die erste Lebensmittelkomponente (LF1) einen Fettgehalt von 0,03 bis 1 Gew.% hat.

7. Verfahren (200) nach einem der vorhergehenden Ansprüche, wobei der vorgegebene Fettgehalt 1 bis 5 Gew.% beträgt oder 1,5 bis 4 Gew.% beträgt.

8. Verfahren (200) nach einem der vorhergehenden Ansprüche, wobei der Schritt des Erhöhens (206) des Drucks der zweiten Lebensmittelkomponente (LF2) mittels der Pumpe (108) Erhöhen des Drucks auf mindestens 80 bar umfasst.

9. Verfahren (200) nach einem der vorhergehenden Ansprüche, wobei das Zwingen (208) der zweiten Lebensmittelkomponente (LF2) durch den ersten Spalt (110) den Druck der zweiten Lebensmittelkomponente (LF2) um 15 bis 30 % senkt.

10. Verfahren (200) nach einem der vorhergehenden Ansprüche, wobei das Zwingen (212) des flüssigen Lebensmittelprodukts (LF) durch den zweiten Spalt (114) den Druck des flüssigen Lebensmittelprodukts (LF) auf einen Druckwert senkt, der unter 15 bar liegt.

11. Verfahren (200) nach Anspruch 3, wobei das Zwingen (205) der flüssigen Lebensmittelkomponente (LF) durch den dritten Spalt (118) den Druck der zweiten Lebensmittelkomponente (LF2) um 15 bis 30 % senkt.

12. Verfahren (200) nach einem der vorhergehenden Ansprüche, wobei
ein Druck der zweiten Lebensmittelkomponente (LF2) nur einmal auf einen Druck von mindestens 80 bar einmalig erhöht wird, und
ein Druck des flüssigen Lebensmittelprodukts (LF) niemals auf einen Druck über 30 bar erhöht wird.

13. System (100) zum Verarbeiten von flüssigem Lebensmittelprodukt (LF), wobei das System (100) umfasst:
eine erste Fluidleitung zum Bereitstellen eines Flusses einer ersten Lebensmittelkomponente (LF1) mit einem ersten Fettgehalt,
eine zweite Fluidleitung zum Bereitstellen eines Flusses einer zweiten Lebensmittelkomponente (LF2) mit einem zweiten Fettgehalt, der höher als der erste Fettgehalt ist,
eine Pumpe (108), die angeordnet ist, um einen Druck der zweiten Lebensmittelkomponente (LF2) zu erhöhen,
einen ersten Spalt (110), der angeordnet ist, um die zweite Lebensmittelkomponente (LF2) zu empfangen, so dass die zweite Lebensmittelkomponente (LF2) durch den ersten Spalt (110) gezwungen werden kann und dadurch homogenisiert wird und bewirkt, dass der Druck der zweiten Lebensmittelkomponente (LF2) abnimmt,
einen Kombinierer (112), der zum Kombinieren der ersten Lebensmittelkomponente (LF1) und der homogenisierten zweiten Lebensmittelkomponente (LF2) angeordnet ist, um ein flüssiges Lebensmittelprodukts (LF) zu bilden, das einen vorgegebenen Fettgehalt hat, und
einen zweiten Spalt (114), der angeordnet ist, um das flüssige Lebensmittelprodukt (LF) zu empfangen, so dass das flüssige Lebensmittelprodukt (LF) durch den zweiten Spalt (114) gezwungen werden kann und dadurch homogenisiert wird und bewirkt, dass der Druck des flüssigen Lebensmittelprodukts (LF) abnimmt.

14. System (100) nach Anspruch 13, umfassend einen zweiten Kombinierer (116), der angeordnet ist, um die erste Lebensmittelkomponente (LF1) und die zweite Lebensmittelkomponente (LF2) zu kombinieren, so dass die zweite Lebensmittelkomponente (LF2) einen Fettgehalt von 8 bis 22 Gew.% hat.

15. System (100) nach einem der vorhergehenden Ansprüche, umfassend einen dritten Spalt (118), der angeordnet ist, um die zweite Lebensmittelkomponente (LF2) zu empfangen, so dass die zweite Lebensmittelkomponente (LF2) durch den dritten Spalt (118) gezwungen werden kann und dadurch homogenisiert wird und bewirkt, dass der Druck der zweiten Lebensmittelkomponente (LF2) abnimmt.

## Revendications

1. Procédé (200) pour traiter un produit alimentaire liquide (LF), le procédé (200) comprenant :
la fourniture (202) d'un flux d'un premier composant alimentaire (LF1) ayant une première teneur en matière grasse,
la fourniture (204) d'un flux d'un deuxième composant alimentaire (LF2) ayant une deuxième teneur en matière grasse qui est supérieure à la première teneur en matière grasse,
l'augmentation (206), au moyen d'une pompe (108), d'une pression du deuxième composant alimentaire (LF2),
le forçage (208) du deuxième composant alimentaire (LF2) à travers un premier espace (110) de sorte que le deuxième composant alimentaire (LF2) est homogénéisé et que la pression du deuxième composant alimentaire (LF2) diminue ainsi,
la combinaison (210) du premier composant alimentaire (LF1) et du deuxième composant alimentaire homogénéisé (LF2) pour former un produit alimentaire liquide (LF) qui a une teneur en matière grasse prédéterminée, et
le forçage (212) du produit alimentaire liquide (LF) à travers un deuxième espace (114) de sorte que le produit alimentaire liquide (LF) est homogénéisé et que la pression du produit alimentaire liquide (LF) diminue ainsi.

2. Procédé selon la revendication 1, l'étape d'augmentation (206) de la pression du deuxième composant alimentaire (LF2) étant précédée par la combinaison (205) du premier composant alimentaire (LF1) et du deuxième composant alimentaire (LF2) de sorte que le deuxième composant alimentaire (LF2) a une teneur en matière grasse de 8 à 22 % en poids.

3. Procédé selon l'une quelconque des revendications précédentes, l'étape de combinaison (210) du premier composant alimentaire (LF1) et du deuxième composant alimentaire homogénéisé (LF2) pour former le composant alimentaire liquide (LF) étant précédée par le forçage (209) du deuxième composant alimentaire (LF2) à travers un troisième espace (118) de sorte que le deuxième composant alimentaire (LF2) est davantage homogénéisé et que la pression du deuxième composant alimentaire (LF2) est ainsi davantage diminuée.

4. Procédé selon l'une quelconque des revendications précédentes, comprenant, après l'étape de forçage (212) du produit alimentaire liquide (LF) à travers le deuxième espace (114), la combinaison (218) du premier composant alimentaire (LF1) et du produit alimentaire liquide (LF) de sorte que le produit alimentaire liquide (LF) a une teneur en matière grasse de 1 à 5 % en poids.

5. Procédé (200) selon l'une quelconque des revendications précédentes, comprenant l'acheminement (220) du produit alimentaire liquide (LF) dans un appareil de traitement thermique (122) après l'étape de forçage (212) du produit alimentaire liquide (LF) à travers le deuxième espace (114).

6. Procédé (200) selon l'une quelconque des revendications précédentes, le premier composant alimentaire (LF1) ayant une teneur en matière grasse de 0,03 à 1 % en poids.

7. Procédé (200) selon l'une quelconque des revendications précédentes, la teneur en matière grasse prédéterminée étant de 1 à 5 % en poids, ou étant de 1,5 à 4 % en poids.

8. Procédé (200) selon l'une quelconque des revendications précédentes, l'étape d'augmentation (206), au moyen de la pompe (108), de la pression du deuxième composant alimentaire (LF2) comprenant l'augmentation de la pression à au moins 80 bars.

9. Procédé (200) selon l'une quelconque des revendications précédentes, le forçage (208) du deuxième composant alimentaire (LF2) à travers le premier espace (110) diminuant la pression du deuxième composant alimentaire (LF2) de 15 à 30 %.

10. Procédé (200) selon l'une quelconque des revendications précédentes, le forçage (212) du produit alimentaire liquide (LF) à travers le deuxième espace (114) diminuant la pression du produit alimentaire liquide (LF) à une valeur de pression inférieure à 15 bars.

11. Procédé (200) selon la revendication 3, le forçage (205) du composant alimentaire liquide (LF) à travers le troisième espace (118) diminuant la pression du deuxième composant alimentaire (LF2) de 15 à 30 %.

12. Procédé (200) selon l'une quelconque des revendications précédentes,
une pression du deuxième composant alimentaire (LF2) étant augmentée une seule fois jusqu'à une pression d'au moins 80 bars une seule fois, et
une pression du produit alimentaire liquide (LF) n'étant jamais augmentée à une pression supérieure à 30 bars.

13. Système (100) pour traiter un produit alimentaire liquide (LF), le système (100) comprenant :
une première ligne de fluide pour fournir un flux d'un premier composant alimentaire (LF1) ayant une première teneur en matière grasse,
une deuxième ligne de fluide pour fournir un flux d'un deuxième composant alimentaire (LF2) ayant une deuxième teneur en matière grasse qui est supérieure à la première teneur en matière grasse,
une pompe (108) agencée pour augmenter la pression du deuxième composant alimentaire (LF2),
un premier espace (110) agencé pour recevoir le deuxième composant alimentaire (LF2), de sorte que le deuxième composant alimentaire (LF2) peut être forcé à travers le premier espace (110) et ainsi devenir homogénéisé et provoquer la diminution de la pression du deuxième composant alimentaire (LF2),
un dispositif de combinaison (112) agencé pour combiner le premier composant alimentaire (LF1) et le deuxième composant alimentaire homogénéisé (LF2) pour former un produit alimentaire liquide (LF) qui a une teneur en matière grasse prédéterminée, et
un deuxième espace (114) agencé pour recevoir le produit alimentaire liquide (LF), de sorte que le produit alimentaire liquide (LF) peut être forcé à travers le deuxième espace (114) et ainsi être homogénéisé, et amener la pression du produit alimentaire liquide (LF) à diminuer.

14. Système (100) selon la revendication 13, comprenant un deuxième dispositif de combinaison (116) agencé pour combiner le premier composant alimentaire (LF1) et le deuxième composant alimentaire (LF2) de telle sorte que le deuxième composant alimentaire (LF2) a une teneur en matière grasse de 8 à 22 % en poids.

15. Système (100) selon l'une quelconque des revendications précédentes, comprenant un troisième espace (118) agencé pour recevoir le deuxième composant alimentaire (LF2), de sorte que le deuxième composant alimentaire (LF2) peut être forcé à travers le troisième espace (118) et ainsi devenir homogénéisé et amener la pression du deuxième composant alimentaire (LF2) à diminuer.
